Europäisches Patentamt

**European Patent Office**

**Office européen des brevets**

(11) Publication number: **0 059 641**
**A1**

## (12) EUROPEAN PATENT APPLICATION

(21) Application number: **82301049.1**

(22) Date of filing: **02.03.82**

(51) Int. Cl.³: **G 01 K 17/00**
**G 01 N 25/20**

(30) Priority: **02.03.81 US 239675**

(43) Date of publication of application:
**08.09.82 Bulletin 82/36**

(84) Designated Contracting States:
**DE FR GB**

(71) Applicant: **LECO CORPORATION**
**3000 Lakeview Avenue**
**St. Joseph Michigan(US)**

(72) Inventor: **Sitek, George Joseph**
**4180 Elizabeth Drive**
**Stevensville Michigan(US)**

(74) Representative: **Robinson, Anthony John**
**Metcalf et al,**
**Kilburn & Strode 30 John Street**
**London, WC1N 2DD(GB)**

(54) A calorimeter vessel, a control system therefor, and a calorimeter system comprising a plurality of calorimeter vessels.

(57) A calorimeter vessel (10) includes a base (80) for supporting a bomb (12) thereon and a downwardly concavely opening container (40) sealably engaging the base (50). The base (50) includes a water supply system permitting a common water supply (14) to supply water to three such vessels which include water level detecting sensors (23, 25) also permitting automatic filling of the vessels. In the preferred embodiment the vessel (10) is filled in two stages providing rapid yet precise filling of each of the vessels. In one embodiment of the invention a microprocessor control circuit is employed for sampling temperature data within each of the vessels during an analysis to ascertain beginning and ending temperatures and for calculating the resultant heat of combustion of a sample. The microprocessor also is employed to automatically control the filling and emptying of the vessel (10) and the firing of the sample containing calorimeter bomb (12).

./...

Croydon Printing Company Ltd.

FIG. 2

## A CALORIMETER VESSEL, A CONTROL SYSTEM THEREFOR, AND A CALORIMETER SYSTEM COMPRISING A PLURALITY OF CALORIMETER VESSELS

The present invention relates to a calorimeter vessel and a control system therefor for determining the heat of combustion of a sample.

Precision calorimeters typically include open top vessels in which a bomb for combusting a specimen is immersed in a manually filled vessel containing a predetermined volume of water. The vessel is closed at the top and water circulated while monitoring its temperature initially and after the sample has been combusted to determine the change in temperature due to the energy content within the specimen. Either isothermal or adiabatic methods can be employed to determine the gross heat of combustion of hydrocarbon fuel samples calculated either in BTU's per pound, calories per gram, or other units. Prior isothermal and adiabatic methods are described in the American Society for Testing Materials Standard D2382-76 published in September of 1976 which described the construction of a calorimeter as well as methods of calculating the gross heat of combustion based upon temperature measurements employing such structure.

The system of the present invention employs an isothermal-type method of determining the heat of combustion or energy content of hydrocarbon fuels such as coal, oil or the like.

According to a first aspect of the present invention a calorimeter vessel for receiving a sample holding calorimeter bomb comprises base means defining a support for a calorimeter bomb including means for supplying water therethrough; a container having sidewalls and being substantially enclosed at one end and open at an opposite end, said open end of said container sealably engagable with said base means with said sidewalls circumscribing said water supply means; and means for moving said container with respect to said base means for opening and closing said vessel defined thereby.

The container is preferably generally vertically oriented and defines a concavely opening chamber extending downwardly.

In one embodiment the vessel includes water level detection means associated with the container at first and second levels, and control means coupled to the water supply means and to the detection means for supplying water initially to the first level at a first flow rate and subsequently to the second level at a second flow rate. The water supply means preferably includes aperture means extending through the base for providing a first flow path of water and; conduit means coupled to the container at an end remote from the open end to provide a second lower flow rate of water to the vessel. Preferably means for circulating water through the vessel is provided comprising pump means coupled to remove water from one end of the vessel, and conduit means extending from the pump to an opposite end of the vessel for circulating water through the vessel during an analysis. In one embodiment there is means for moving the container with respect to the base comprising a pair of cylinder means extending between the base and the container for raising and lowering the container with respect to the base. A moat formed downwardly in the base and circumscribing the periphery of the container may be provided as may drain means coupled to the base for draining water therefrom.

In a preferred embodiment the container includes means for identifying a calorimeter bomb placed therein. Each bomb employed in connection with the vessel preferably includes a coded indicia and in which the identifying means comprises a reader mounted to the container for reading the information contained by the indicia.

According to a second aspect of the present invention a calorimeter control system comprises temperature detecting means positioned within a calorimeter vessel, circuit means coupled to the temperature detecting means for sampling the temperature within the calorimeter vessel at periodic intervals and for storing data representing the detected temperature readings, the circuit means operative to correlate the temperature data with system parameters to determine the initial and end temperatures for the determination of the heat content of a sample. The circuit preferably includes a microprocessor. In one embodiment the calorimeter vessel includes means for supplying water thereto at different rates and in which the system further includes water level detecting means coupled to the microprocessor for controlling the water supplying means. Such a calorimeter control system may be used with a calorimeter vessel according to the first aspect of the present invention.

According to a third aspect of the present invention a calorimeter system comprises a plurality of calorimeter vessels each including base means for supporting a calorimeter bomb thereon and a container sealably mounted to the base and movable between open and closed positions for loading the bomb within the vessel so formed and for conducting an analysis respectively; a common supply of water and conduit means coupling the supply to each of the vessels, the conduit means including control valve means; and control means for actuating the control valve means for selectively filling and emptying each of the vessels with water. Such a calorimeter system may use a calorimeter control system according to the second aspect of the invention.

The present invention represents a significant improvement over manual prior art calorimeter vessels and provides control circuit means permitting early firing of the calorimeter bomb and rapid determination of the resultant heat of combustion of a sample. The preferred embodiment of the calorimeter control system includes a microprocessor for correlating initial temperature readings to calculate an initial temperature representative of the temperature at which the slope of the temperature readings would initially stabilize and for firing the calorimeter bomb at a predetermined time. The microprocessor also samples the temperature data to determine when the temperature slope becomes constant after firing and extrapolates the temperature representative data to ascertain the final temperature such that the temperature differential and the energy content of the sample can be determined. The calorimeter control system of the present invention provides for sampling temperature data to permit early firing of the calorimeter bomb.

The invention may be carried into practice in various ways but one calorimeter vessel, one control system for operating such a calorimeter vessel and one calorimeter system comprising a plurality of calorimeter vessels embodying the various aspects of the invention will now be described by way of example with reference to the accompanying drawings, in which:

Figure 1 is a diagram in schematic form of a control system for operation of a calorimeter vessel;

Figure 2 is a vertical cross sectional view of an open calorimeter vessel;

Figure 3 is a vertical cross sectional view of the calorimeter vessel of Figure 2 taken along an axis orthogonal to the axis of Figure 2;

Figure 4 is a circuit diagram in block form of the electrical control circuit of the control system of Figure 1;

Figures 5 and 6 are flow diagrams of the operation of the control system of Figures 1 and 4; and

Figure 7 is a graph showing the time versus temperature detected during operation of the calorimeter.

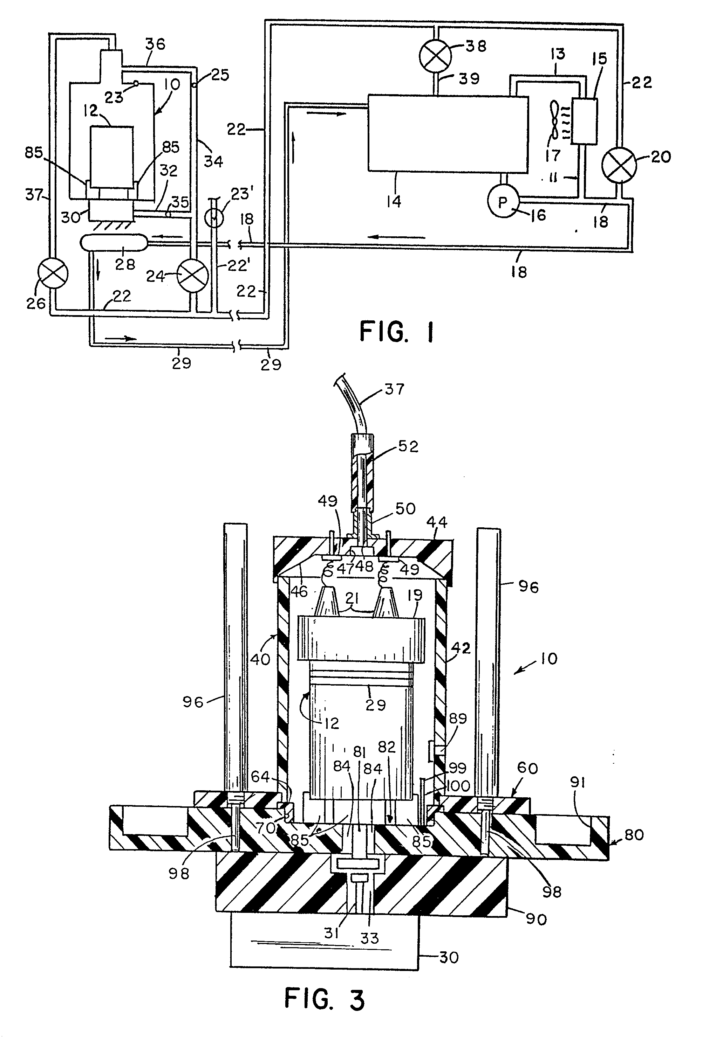

Referring initially to Figure 1 there is shown a calorimeter which includes a vessel 10 for holding a calorimeter bomb 12 therein. The vessel is filled with water from a tank 14 through conduit means 18, a supply valve 20, a conduit 22, and first and second vessel filling valves 24 and 26 respectively. As will be described hereinafter, valve 24 supplies a relatively fast flow rate for initially filling the vessel 10 to a first level as determined by a level detecting thermistor 23 mounted to the vessel while valve 26 provides a slow flow rate to top off the filling of the vessel to a second level detected by a second thermistor 25. Both valves 24 and 26 are supplied with pressurized water from a pump 16 through the conduit 22. The conduit 18 is also coupled to a brass heat sink 28 in thermal contact with a pump motor 30 with a return conduit 29 to tank 14 for circulating water to cool the pump 30 minimizing the heat transfer to the system by the pump motor 30 which is used for circulating water within the calorimeter vessel as described below. The water circulating loop includes a conduit section 32 coupled to the pump 30 and to a vertically extending conduit 34 coupled to a first inlet hose 36 which is coupled to the top of the vessel 10 for circulating fluid during an analysis. A drain valve 38 is provided for gravity draining water from the vessel after an analysis with air being admitted through a standpipe 22' having a check valve 23' therein. A drain level detector 35 indicates when the vessel has been emptied. Typically, the tank 14, the pump 16, and the valves 20 and 38 will be located below the vessel 10.

The conduits 18, 22 and 29 can be coupled to additional identical calorimeter vessels at the locations shown by the broken lines in Figure 1, although additional separate drain and supply valves (not shown) are employed so that the vessels can be individually filled and emptied. In a preferred embodiment three such vessels are commonly coupled to the supply tank 14 which holds 38 l of water for the calorimeter vessels, each vessel of which employs approximately 1.75 l of water when filled. Also associated with the tank 14 is a cooling loop including conduits 11 and 13 between which a heat exchanger 15 with an associated cooling fan 17 is provided to continuously cool the water in the tank to remove energy added due to the operation of the calorimeter vessels. As will become apparent, the actual temperature of the water contained within tank 14 need not be precisely controlled other than to generally maintain it at about room or ambient temperature.

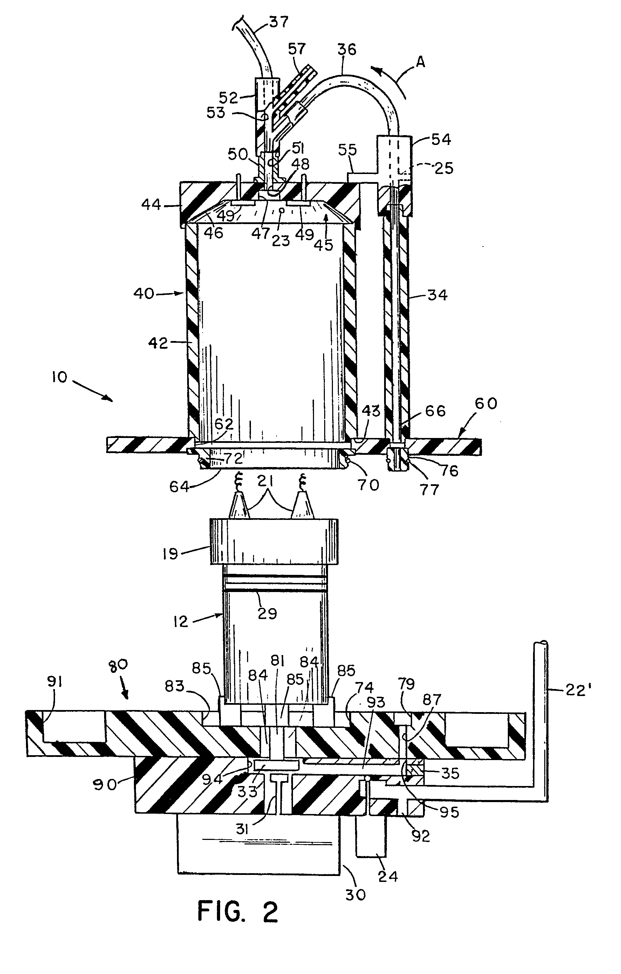

Figure 2 shows one of the identical calorimeter vessels 10 in an open position. The vessel comprises a concavely downwardly opening container 40 which sealably engages a generally rectangular base 80 for supporting the bomb 12 thereon. The container 40 includes a sidewall 42 which in the preferred embodiment is cylindrical and made of a polymeric material such as an acrylic material or polyvinylchloride (PVC). The upper end of the container 40 is sealably enclosed by menas of a tap or cap 44 which includes an inwardly tapered and configurated recess 45 having a first conical wall section 46 communicating with a cylindrical wall section 47 and a narrowed final cylindrical wall section 48 extending through the top. The first water level sensing thermocouple 23 is mounted to the top 44 and is exposed to the conical sidewall 46 for indicating when fluid filling the container 42 has reached this first level approximately midway up the wall 46. The top 44 is made of PVC and is permanently sealed to the sidewall 42 by means of a conventional bonding adhesive. Mounted in spaced relationship to each other and sealably extending through the top 44 are a pair of nickel plated arcuate shaped (170°) electrical contacts 49 which are engaged by contacts 21 on the bomb 12 to supply electrical energy through the top 44 for igniting the bomb ignition wire. The arcuate shape of the two electrical contacts virtually ensures proper contact with the oppositely spaced bomb contacts 21.

Coupled to the cylindrical opening 48 through the top 44 is a coupling 50 to which a tube receiving adaptor 52 is mounted. Both the adaptor 52 and the coupling 50 are made of PVC and are secured to one another by conventional bonding adhesives and include central openings 51 and 53 respectively, communicating with the opening 48 through the top 44. A conduit 36 is coupled to one leg of the fitting 52 to provide circulating water into the vessel in a direction indicated by arrow A in Figure 2. A second conduit 37 is coupled to the top of the fitting 52 and supplies a trickle flow of water through valve 26 (Figure 1) to fill vessel 10 to a second level as detected by thermistor 25 mounted to coupling 54 to which tube 36 is also mounted. A breather vent 57 communicates with the passageway 53 and permits the passage of air therethrough. The coupling 54 includes a mounting tab 55 bonded to the top 44 and is coupled to the vertically extending PVC tube 34 by means of conventional bonding adhesives.

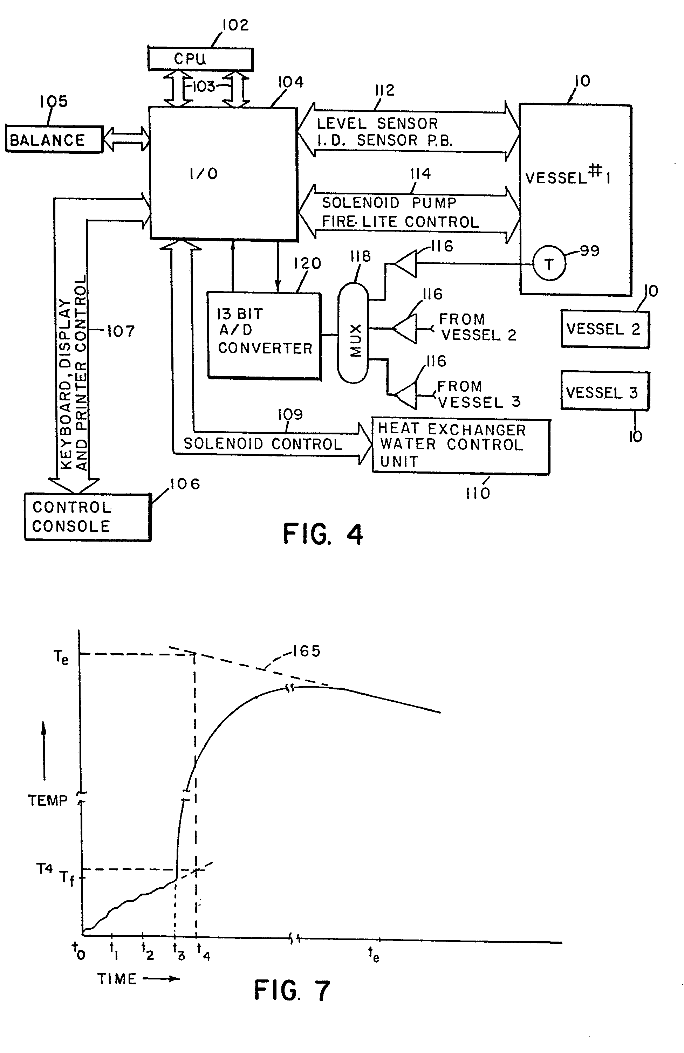

The lower ends of the cylindrical sidewall 42 of vessel 40 and of the tube 34 are secured to a movable plate 60 made of PVC and bonded to the sidewall 42 and the tube 34 by conventional adhesives. The bottom rim of the sidewall 42 includes an annular recess 43 for interfitting into a cylindrical aperture 62 in a plate 60 as shown in Figure 2. An annular PVC ring 64 is bonded to the bottom of the plate 60 and includes an annular recess 72 to receive an O-ring or quad seal 70. The seal 70 thus extends below plate 60 and engages the cylindrical sidewall of a recess in the base 80 to sealably couple the container 40 to the base 80 as seen in Figure 3.

A second PVC ring 76 is bonded to the plate 60 in alignment with and under an aperture 66 formed through the plate 60 and communicating with the tube 34 to provide a flow path therethrough. An O-ring seal 77 fits within a recess in the ring 76 and sealably extends into a cylindrical recess 79 formed in the base 80 when the container is closed as seen in Figure 3.

The plate 60 also supports a pair of pneumatically operated cylinders 96 (Figure 3) for raising and lowering the container 40 with respect to the base 80.

The base 80 is also made of PVC and includes a central downwardly extending recess 82 with a cylindrical sidewall 83 permitting the seal 70 to sealably couple the container 40 to the base 80 as shown in Figure 3. In the centre of the floor 86 of the recess 82 there are provided four equally spaced cylindrical openings 84 in a ring about a centre portion 81 extending through the base 80 for providing a water flow path to the interior volume of the vessel. Four generally arcuate shaped and equally spaced notched pedestals 85 are positioned in a circle within recess 82 for supporting the bomb 12 thereon in vertically spaced relationship above the floor 86 of the recess 82 as shown. A moat 91 formed downwardly from the top of the base 80 surrounds the recess 82 for catching residual water which may remain in the event that drainage of the vessel is not completed due to a malfunction and the container 40 is opened.

Below the base 80 there is provided a PVC pump plate 90 sealably coupled to the base and which includes a water inlet 92 to which the conduit 32 (Figure 1) is coupled and which communicates with an impeller chamber 94 by means of a conduit 93 formed through the plate 90. The conduit 93 also includes a stub section 95 extending upwardly and in communication with a vertically extending aperture 87 in the base 80 which, in turn, communicates with the tube 34 through the seal 77. A motor 30 is mounted to plate 90 and has a drive shaft 31 with a magnet at its end to magnetically couple the shaft to a magnetic impeller 33 rotatably suspended from the centre portion segment 81 and housed within a chamber 94. This drive arrangement thermally isolates the shaft of the electrically operated motor 30 from the calorimeter.

During the initial filling of the vessel, the primary flow path for water is through the conduit 32 (Figure 1), the inlet 92, the conduit 93 into the impeller chamber 94 through the valve 24 and upwardly through the openings 84 in the base 80 into the interior space of the vessel. During this filling period the motor 30 is not operating. During operation of the motor 30, the associated impeller draws water downwardly through the opening 84 and outwardly through the conduit 93 and upwardly through the conduits 95 and 87 and the tube 34, through the conduit 36 and through the top of the container 40 for circulating water during operation of the calorimeter.

The bomb 12 supported on the pedestal legs 85 is a conventional cylindrical stainless steel vessel having a screw lid 19, the top of which includes spring contacts 21 which are electrically coupled to a conventional internal ignition wire for ignition of a combustible atmosphere and specimen contained therein. Also, the bomb 12 conventionally includes a gas fitting (not shown) for the pressurization of the vessel to approximately 2750 kPa of oxygen. Contacts 21 engage contacts 49 as seen in Figure 3 for providing electrical operating energy for the ignition wire. The bomb is of conventional construction and of the type generally used in calorimeters with the exception of bar code stripes 29 around the side thereof to uniquely identify each bomb employed with the calorimeter of the present invention. Indicia 29 are scanned by a photo-optical detector 89 (Figure 3) sealably mounted through the sidewall 42 of the vessel as it is lowered to provide a signal uniquely identifying a particular bomb. This signal is then used to correlate the bomb's calibration number (corresponding generally to its thermal mass) automatically such that the electrical circuit associated with the calorimeter vessel can provide a correction factor for each of the several bombs which can be employed in the calorimeter.

Referring now to Figure 3, the means by which the container is opened and closed comprises a pair of cylinders 96 threadably secured to plate 60 and having pistons 98 which have their ends secured to the base 80. Actuation of the double acting cylinders 96 in one direction therefore causes the plate 60 to move away from the base 80 to open the vessel to the position shown in Figure 2. The cylinders 96 and pistons 98 serve as guide and support means for the container when opened. To close the vessel the double acting cylinders 96 are activated in an opposite direction to draw the pistons 98 therein and lower the container into the position shown in Figure 3 whereupon the system is again sealed for use.

A conventional temperature detecting nickel wire 99 is mounted to an insulated pedestal 100 (Figure 3) extending upwardly from the floor 86 of the recess 82 such that the temperature of water within the vessel can be measured to determine the energy content of the sample contained within the bomb 12. The structural elements on the calorimeter are made of a polymeric material such as PVC to minimize heat transfer in the calorimeter with respect to the surroundings. Further, the vessel 10 shown in Figures 2 and 3 is mounted in a cabinet insulated with suitable closed cell foam material to further isolate the calorimeter from ambient temperature variations which may occur. Having described the physical structure of the improved vessel itself, a description follows of the electrical control circuit employed for controlling the operation of the calorimeter.

Figure 4 shows the electrical control circuit which includes a microprocessor 102 including a CPU and ROM and RAM memory circuits. In the preferred embodiment, an Intel 8085 commercially available microprocessor is employed and coupled by data links 103 to an input/output circuit 104. The circuit 104 interfaces the microprocessor with the various detectors and control elements of the calorimeters. A digital balance 105 for weighing a sample and providing digital weight-representative signals to the microprocessor is coupled to one input of the circuit 104. A control console 106 including a keyboard and a printer is also coupled to the microprocessor through the circuit 104 by means of a data link 107 intercoupling the console 106 with the circuit 104. The microprocessor is coupled to the heat exchanger 15, 17 (Figure 1), the pump 16 and the valves shown in Figure 1 (a circuit shown schematically in Figure 4 as the unit 110) by means of a data link 109 and the circuit 104. The sensors such as sensors 23, 25, 35 and 89 associated with each of the vessels are coupled to the circuit 104 through data links 112 while the bomb igniter wire, the pump motor 30, and associated indicator lights on each of the vessels 10 are coupled to the circuit 104 via data links 114. Finally, the temperature sensor 99 associated with each of the three vessels of the system of the preferred embodiment are coupled to the input/output circuit 104 through first a chopper stabilized amplifier 116, a multiplexer 118 and a 13 bit A/D converted 120 which converts the analog signals from the temperature measuring circuit 99 into a digital format for the microprocessor 102. It is noted that the temperature detecting means 99 includes the nickel wire electrically mounted in a conventional temperature compensating bridge circuit such that the signals from the circuit 99 shown in Figure 4 which are applied to amplifiers 116 are an analog voltage representative of the actual temperature of the water surrounding the nickel wire mounted on the pedestal 100 (Figure 3).

By use of a microprocessor with data storage means it is possible to calibrate each of several bombs 12, each identified with a unique code 29, and store the calibration factor for each bomb used in the system. Also, by providing temperatures read from the temperature detecting means 99, it is not necessary as in a conventional isothermal calorimeter to wait until the initial temperature curve is stabilized. Thus, it is possible to fire the bomb approximately only 3 minutes after the filling of the container as opposed to 15 to 20 minutes as required in conventional calorimeters. By periodically sampling the water temperature in the vessel, and the change in the slope of the increasing temperature readings at predetermined times ($t_2$ and $t_3$ Figure 7) an initial temperature $T_4$ can be computed which is slightly higher than the temperature would be if simply extrapolated. This is done to compensate for the additional energy initially remaining in the system since the bomb is fired before the temperature stabilizes. This computation generally follows the following equation:

$$T_4 = T_3 + \Delta t \times \text{slope } t_3 \times CF$$

Where $T_3$ is the temperature at firing, $\Delta t$ is 1 second, slope $t_3$ is the change in temperature occurring at time $t_3$ (i.e., the slope of the temperature curve at $t_3$) and CF is the empirically determined correction factor. Typical units where 4000 counts from circuit 120 represent $1^{\circ}C$ are:

$T_3$ = 41420 counts

slope $t_3$ = 139 counts/min.

CF = 67 counts

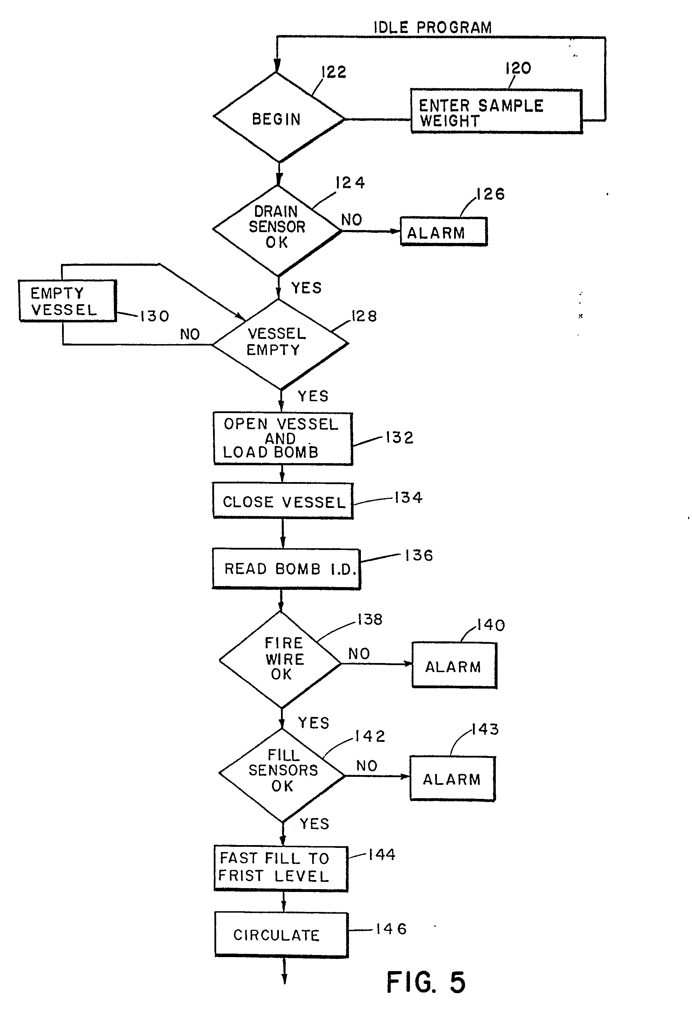

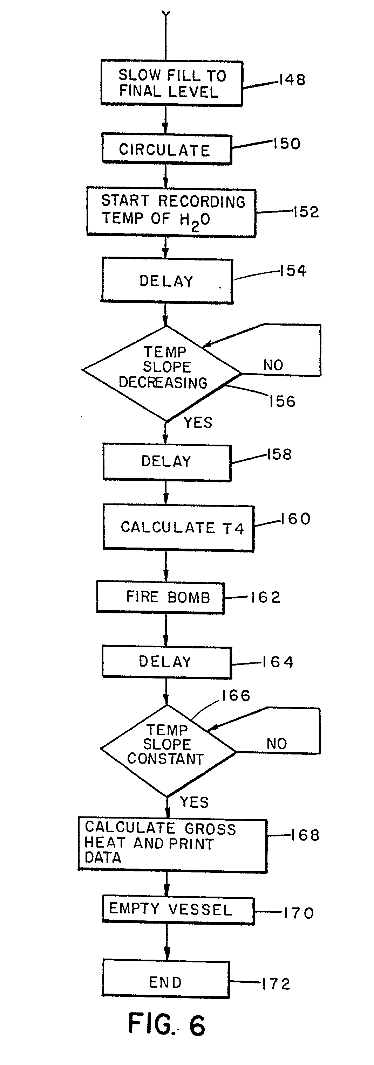

Further, the end temperature ($T_3$) after firing of the bomb can also be determined by conventional algorithms again by sampling temperature data until such time as the change in temperature becomes constant near the end of the cycle of operation. The programming of the microprocessor and the operation of the calorimeter is shown in the flow diagrams of Figures 5, 6, and the chart of Figure 7 now described.

The calorimeter operation is initiated by weighing the sample using the digital balance 105 and entering the sample weight into the computer memory as indicated by the block 120 (Figure 5). The sample can then be physically placed in the bomb together with the igniting fuse and the bomb is sealed and pressurized with oxygen to approximately 2750 kPa. A push button start switch on the control console 106 is then actuated beginning the cycle of operation indicated by the block 122 in Figure 5. The vessel empty sensor 35 (Figure 1) is then tested as indicated by the block 124 to ascertain its operational state. In the event that the sensor is open or short circuited, an alarm 126 is activated indicating to the operator that the drain sensor is not operational and should be replaced. If the sensor is operational, its output signal is tested to ascertain whether or not the vessel has been drained of water as indicated by the block 128. This test is conducted to ascertain whether or not the vessel can be opened for inserting the bomb.

In the event that the vessel is not empty, a signal from the circuit 102 actuates the valve 38 to open to permit draining of the vessel into the tank 14 (Figure 1) as indicated by the block 130. The valve 38 and the remaining valves, pumps and cylinders are solenoid operated and controlled by signals from the microprocessor through the input/output circuit 104 and the data link 114. Once the sensor 35 indicates the vessel is empty, it is opened by actuation of the cylinders 96 (Figure 3) and the bomb is loaded onto the pedestals 85 as indicated by the block 132 in Figure 5. Next, the operator actuates a close switch on the control console 106 (Figure 4) and, as indicated by the block 134, the cylinders 96 are actuated to close the vessel to the position shown in Figure 3. As the vessel closes the photo-optical scanner 89 scans the indicia 29 on the side of the bomb to identify the particular bomb being used in the calorimeter. The data identifying the bomb is thus read by the computer and entered into the memory as indicated by the block 136.

The continuity of the firing wire associated with the bomb is then tested as indicated by the block 138, and if it is open or the circuitry connecting the fuse wire to the firing circuit is open, an alarm is sounded as indicated by the block 140. If it is operational, the fill sensors 23 and 25 are next tested as indicated by the block 142 to ascertain their operational state. If either of the sensors are inoperative an alarm is sounded as indicated by the block 143. These tests are conducted by the computer checking the continuity of the sensors and the fuse wire through the data links 112 and 114 and the circuit 104. With the vessel closed and the sensors and fuse operational, the valves 20 and 24 and the pump 16 are activated by signals from the data link 114 to fill the vessel until such time as water engages the sensor 23 as indicated by the block 144. This is a relatively fast fill requiring only approximately 15 seconds to complete. The pump 16 provides fluid pressure not only to the valve 24 through the conduit 22 and the valve 20, but also to supply cooling water through the heat exchanger 28 associated with the pump 30. After the first fill level has been achieved, the valves 20 and 24 are closed and the pump 30 is activated for a period of approximately 10 seconds to permit air bubbles to escape the system through the bleeder vent 57 (Figure 2) at the top of the vessel above the level of the sensor 25 mounted to the coupling 54. This circulation step is indicated by the block 146 of Figure 5.

Next, the operational sequence proceeds as shown in Figure 6 by the deactivation of the pump 30 and the activation of the valves 20 and 26 to fill the vessel to its final level whereupon water reaches the level of the sensor 25 mounted on the coupling 54. This step is indicated by the block 148 of Figure 6 and takes only about 20 seconds since the filling volume is small. After filling to the final level in which approximately 1.75 l of fluid is in the calorimeter vessel, the valves 20 and 26 are closed and the pump 30

is again actuated for a period of approximately 20 seconds to equalize the water temperature and remove air bubbles as indicated by the block 150 (Figure 6). The end of this time period corresponds to time $t_0$ shown in Figure 7 and the signals from the temperature detecting unit 99 are stored in the memory at 6 second periodic intervals. The periodic temperature is recorded as indicated by the block 152 and continues to be recorded throughout the remainder of each operating cycle of the calorimeter. A 2 minute delay timer is then run as indicated by the block 154 after which the temperature (shown in solid lines in the time-temperature graph of Figure 7) difference between adjacent temperature samples is tested to ascertain whether or not the change of the slope of the increasing temperature (due to water movement and thermistor heat of the sensors within the system and the differential between the water and ambient temperatures) curve has stopped increasing and started decreasing (i.e., the second differential of the time-temperature curve is 0 or negative). This test is conducted on the temperature data applied to the microprocessor with a standard algorithm subroutine in the microprocessor as indicated by the block 156. Once the temperature slope begins decreasing, a 1 minute delay timer indicated by the block 158 runs to reach the firing time at time $t_3$. During the time $t_2$ and the initial $t_3$, the temperature $T_4$ is calculated based upon the stored temperature data as noted earlier and assigned to time $t_4$ as indicated by dashed lines in

Figure 7. $T_4$ is one of the two temperatures employed in the calculation of the heat of combustion of the specimen as described below. This calculation step is indicated by the block 160 in Figure 6. The use of the microprocessor in analyzing the slope of changing temperature data permits firing of the bomb well prior to the actual temperature slope becoming constant. Thus, for example, the bomb is typically fired at $t_3$ approximately 3 minutes after the last filling and circulating step has been completed ($t_0$) instead of, for example, 15 to 20 minutes later. After the one minute delay indicated by the block 158, the microprocessor provides a firing signal to the bomb ignition wire through the circuit 104 and the data link 114 which causes ignition and complete combustion of the specimen. Heat from this reaction naturally begins heating the water as indicated by the time-temperature graph of Figure 7 and a 6 minute timer is set as indicated by the block 164 after which a test is conducted to ascertain whether or not the temperature slope has become constant as indicated by the block 166. During this period of time, the pump 30 is actuated to continuously circulate water past the bomb and the sensor 99 assuring uniform water temperature. By sampling the periodic temperature data to ascertain when, after the peak temperature has been reached and the declining temperature slope toward the end of the time temperature curve has reached a steadily declining level, the constant slope is detected. It is noted that the time and temperature axis of the graph shown in Figure 7 are broken to indicate, for example, that the initial temperature changes are in a matter of hundredths of a degree while the end temperature $T_3$ can be 2 to $3^{\circ}$ higher. Further, the ending time $\underline{t}_e$ can be several minutes after time $\underline{t}_3$ of firing although 6 minutes is typical.

If the temperature slope is constant, $T_e$ is calculated by extrapolating rearward to $\underline{t}_4$ as indicated by dashed line 165 in Figure 7 by the microprocessor using an algorithm to determine the temperature $T_e$ which is used for determining the heat of combustion of the specimen.

The heat of the specimen is determined by the standard equation comprising:

$$Q = (T_e - T_4) \times (W \times F_1 \times F_2) - \underline{e}_1 - \underline{e}_2 - \underline{e}_3$$

where: Q is the heat of combustion or energy content of the sample either in BTU's per pound, calories per gram or megajoules per kilogram as desired; W is the weight of the specimen in grams, $F_1$ is an empirically determined calibration factor corresponding to the thermal mass of the vessel and comprises a number which can be determined by running a known specimen in the system and storing the number in the storage circuit means associated with the microprocessor; $F_2$ is an empirically determined calibration factor corresponding to the thermal mass of the bomb with such calibration information stored for each bomb uniquely identified by the identifying indicia 29 on the bomb; and $\underline{e}_1$, $\underline{e}_2$, and $\underline{e}_3$ are the

standard correction factors for the heat of formation of $HNO_3$, $H_2SO_4$, and the heat of combustion of the fuse respectively, all of which are stored in the microprocessor memory. The algorithm for providing this simple mathematical calculation is conventionally programmed into the microprocessor and the resultant data is then supplied through the input/output circuit 104 and the data line 107 to the control console 106 and printed for the operator to provide a permanent record of the heat of combustion of the sample. Naturally, if desired, a sample identification number can be keyed into the system such that each printout will include a sample identification number associated with the sample being run. Subsequent to the calculation and data printout step indicated by the block 168 in Figure 6, the vessel is emptied by the activation of the drain valve 38 and deactivation of the pump 16. After emptying as indicated by the block 170, the analysis of the sample has been completed as indicated by the block 172 and the vessel can be opened and a new analysis run starting with the block 122 of Figure 5.

Thus, the calorimeter of the present invention provides a closed system in which water need not be manually handled and which provides precise, accurate and automatic filling of the calorimeter vessel. Further, the calorimeter of the present invention provides for relatively fast analysis of a sample by not only rapidly filling the vessel with water but also by permitting firing of the calorimeter bomb relatively quickly after the vessel has been filled.  Since several vessels can be employed, during an analysis in one vessel, another vessel can be emptied while a third loaded with a bomb.  Thus, the sample throughput of the system is high permitting, for example, 15 samples to be run in one hour.

CLAIMS

1. A calorimeter vessel (10) for receiving a sample-holding calorimeter bomb (12) comprising base means (80) defining a support for a calorimeter bomb including means for supplying water therethrough; a container (40) having sidewalls (42) and being substantially enclosed at one end and open at an opposite end, said open end of said container sealably engagable with said base means with said sidewalls circumscribing said water supply means; and means (96) for moving said container with respect to said base means for opening and closing said vessel defined thereby.

2. A vessel as claimed in Claim 1 in which the container is generally vertically oriented and defines a concavely opening chamber (40) extending downwardly.

3. A vessel as claimed in Claim 1 or Claim 2 which includes water level detection means (23, 25) associated with the container at first and second levels, and control means coupled to the water supply means and to the detection means (24, 26, 36, 37) for supplying water initially to the first level at a first flow rate and subsequently to the second level at a second flow rate.

4. A vessel as claimed in Claim 1, 2 or 3 in which the water supply means includes aperture means (84) extending through the base for providing a first flow path of water and; conduit means (32) coupled to the container at an end remote from the open end to
provide a second lower flow rate of water to the
vessel.

5.    A vessel as claimed in any one of the preceding
claims which includes means for circulating water
through the vessel comprising pump means (30) coupled
to remove water from one end of the vessel, and conduit
means (32) extending from the pump to an opposite end
of the vessel for circulating water through the vessel
during an analysis.

6.    A vessel as claimed in any one of the
preceding claims, in which the means for moving the
container with respect to the base comprises a pair of
cylinder means (96) extending between the base and the
container for raising and lowering the container with
respect to the base.

7.    A vessel as claimed in any one of the preceding
claims which includes a moat (91) formed downwardly in
the base and circumscribing the periphery of the container.

8.    A vessel as claimed in any one of the preceding
claims which includes drain means (38) coupled to the
base for draining water therefrom.

9.    A vessel as claimed in any one of the preceding
claims in which the container includes means (29) for
identifying a calorimeter bomb placed therein.

10. A vessel as claimed in Claim 9 in which each bomb employed in connection with the vessel includes a coded indicia and in which the identifying means comprises a reader (89) mounted to the container for reading the information contained by the indicia.

11. A calorimeter control system comprising: temperature detecting means (99) positioned within a calorimeter vessel, circuit means (104) coupled to the temperature detecting means for sampling the temperature within the calorimeter vessel at periodic intervals and for storing data representing the detected temperature readings, the circuit means operative to correlate the temperature data with system parameters to determine the initial and end temperatures for the determination of the heat content of a sample.

12. A calorimeter control system as claimed in Claim 11 in which the circuit means includes a microprocessor (102).

13. A calorimeter control system as claimed in Claim 11 or 12 in which the calorimeter vessel includes means (24, 26, 36, 37) for supplying water thereto at different rates and in which the system further includes water level detecting means (23, 25) coupled to the microprocessor for controlling the water supplying means.

14.  A calorimeter control system as claimed in
Claim 11, 12 or 13 in which the calorimeter vessel is
as claimed in any one of Claims 1 to 10.

15.  A calorimeter system comprising a plurality
of calorimeter vessels (10) each including base means
(80) for supporting a calorimeter bomb (12) thereon
and a container (40) sealably mounted to the base (80)
and movable between open and closed positions for
loading the bomb within the vessel so formed and for
conducting an analysis respectively;  a common supply
of water (14) and conduit means (18, 22, 29)
coupling the supply to each of the vessels, the
conduit means including control valve means;  and
control means for actuating the control valve means
for selectively filling and emptying each of the
vessels with water.

16.  A calorimeter system as claimed in Claim 15
which includes a calorimeter control system as claimed
in Claim 11, 12, 13 or 14.

0059641

1/5

FIG. 1

FIG. 3

0059641

FIG. 2

FIG. 4

FIG. 7

FIG. 5

0059641

```
          ┌─────────────────┐
          │  SLOW FILL TO   │────148
          │  FINAL LEVEL    │
          └─────────────────┘
                   │
          ┌─────────────────┐
          │    CIRCULATE    │────150
          └─────────────────┘
                   │
          ┌─────────────────┐
          │ START RECORDING │────152
          │  TEMP OF H₂O    │
          └─────────────────┘
                   │
          ┌─────────────────┐
          │     DELAY       │────154
          └─────────────────┘
                   │
               ╱───────╲
              ╱  TEMP   ╲───── NO
              ╲  SLOPE   ╱
               ╲DECREASING╱────156
                ╲───────╱
                   │ YES
          ┌─────────────────┐
          │     DELAY       │────158
          └─────────────────┘
                   │
          ┌─────────────────┐
          │  CALCULATE T4   │────160
          └─────────────────┘
                   │
          ┌─────────────────┐
          │   FIRE BOMB     │────162
          └─────────────────┘
                   │
          ┌─────────────────┐
          │     DELAY       │────164
          └─────────────────┘
                   │     166
               ╱───────╲
              ╱  TEMP   ╲───── NO
              ╲  SLOPE   ╱
               ╲CONSTANT ╱
                ╲───────╱
                   │ YES
          ┌─────────────────┐
          │ CALCULATE GROSS │────168
          │ HEAT AND PRINT  │
          │ DATA            │
          └─────────────────┘
                   │
          ┌─────────────────┐
          │  EMPTY VESSEL   │────170
          └─────────────────┘
                   │
          ┌─────────────────┐
          │      END        │────172
          └─────────────────┘
```

$T4$

Temp of $H_2O$

## FIG. 6

## DOCUMENTS CONSIDERED TO BE RELEVANT

| Category | Citation of document with indication, where appropriate, of relevant passages | Relevant to claim |
|---|---|---|
| A | US – B – 480 350 (W. REGENASS et al.)<br>* claim 1; fig. 1 *<br>-- | 1-14 |
| A | DE – A1 – 2 840 595 (SANDOZ-PATENT-GMBH)<br>* claim 1; fig. *<br>-- | 1-14 |
| A | DE – C – 238 395 (A.H. WALRATH)<br>* claim 1; fig. 1 *<br>-- | 1-10 |
| A | US – A – 3 789 662 (J.F. ZETTLER et al.)<br>* fig. 1, 2 *<br>-- | 15,16 |
| A | REVIEW OF SCIENTIFIC INSTRUMENTS, Vol. 51, No. 5, May 1980, New York<br>K.J. DICKENS et al. "Microcomputer Controlled Integrator for Calvet-Type Twin Calorimeters"<br>pages 675 to 677<br>* whole document *<br>-- | 11-14 |
| A | CH – A5 – 571 218 (SANDOZ AG)<br>---- | |

**CLASSIFICATION OF THE APPLICATION (Int. Cl. 3)**

G 01 K 17/00
G 01 N 25/20

**TECHNICAL FIELDS SEARCHED (Int.Cl. 3)**

G 01 K 17/00
G 01 N 25/20
G 01 N 33/22

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons
&: member of the same patent family, corresponding document

The present search report has been drawn up for all claims

| Place of search | Date of completion of the search | Examiner |
|---|---|---|
| Berlin | 12-05-1982 | SCHWARTZ |

EPO Form 1503.1 08.78